# EUROPEAN PATENT APPLICATION

(11) **EP 4 596 873 A1**
(43) Date of publication of application: **06.08.2025**
(21) Application number: 24155662.0
(22) Date of filing: 05.02.2024
(51) Int. Cl.: F03D 80/50, F03D 1/06

(54) **A METHOD FOR REPAIRING A JOINT CONNECTION OF A WIND TURBINE BLADE ROOT**

(71) Applicant: LM Wind Power A/S, 6000 Kolding (DK)
(72) Inventor: THUESEN, Jesper, DK-6000 KOLDING (DK); BENTSEN, Peter, DK-6000 KOLDING (DK)
(74) Representative: ZBM Patents - Zea, Barlocci & Markvardsen

(57) **Abstract**

There is described a method of repairing a joint connection of a wind turbine blade root. The method comprises identifying a repair site at the joint connection, cutting a groove through a laminate of the wind turbine blade and into the joint connection at the repair site and inserting an insert into the groove, whereby the insert contacts the laminate and the joint connection.

## Description

The present disclosure relates a method of repairing a joint connection of a wind turbine blade root, a wind turbine blade root comprising the joint connection repaired according to the method and a wind turbine blade comprising the wind turbine blade root.

### BACKGROUND

A wind turbine includes wind turbine blades. These wind turbine blades each comprise a wind turbine blade root configured to connect to a rotor hub of the wind turbine by a joint connection. These joint connections may become loose if the surrounding laminate of the wind turbine blade becomes damaged (e.g. cracked). More recently, higher gravity-induced edgewise loads on the blade root resulting from the increased size and weight of wind turbine blades have made damage to laminate surrounding joint connections more likely. Loosening of the joint connections may, for example, alter performance of the wind turbine blade and, hence, the efficiency with which energy is generated by the wind turbine. The wind turbine blades may even become disconnected from the rotor hub.

One remedy for these issues is to replace the wind turbine blade that has experienced damage. However, replacement of wind turbine blades is time-consuming and expensive. Similarly, removing the damaged wind turbine blade from the wind turbine for repair is also expensive and significantly interrupts the operation of the wind turbine.

Hence, there is a need for a method of repairing a joint connection of a wind turbine blade root that negates the need for replacement of the wind turbine blade and does not require the wind turbine blade to be removed from the wind turbine.

### SUMMARY

According to a first aspect of the present disclosure, there is provided a method of repairing a joint connection of a wind turbine blade root. The method comprises identifying a repair site at the joint connection, cutting a groove through a laminate of the wind turbine blade and into the joint connection at the repair site and inserting an insert into the groove, whereby the insert contacts the laminate and the joint connection.

The first aspect is advantageous, because the joint connection may be repaired such that it may not be necessary to replace the wind turbine blade. In other words, the lifetime of the wind turbine blade may be prolonged. Further, advantageously, the joint connection may be repaired without even having to remove the wind turbine blade from the wind turbine. In short, the first aspect is advantageous in reducing the time and costs associated with ensuring and prolonging effective performance of the wind turbine.

According to a second aspect of the present disclosure, there is provided a wind turbine blade root comprising the joint connection repaired according to the first aspect.

According to a third aspect of the present disclosure, there is provided a wind turbine blade comprising the wind turbine blade root according to the second aspect.

Advantages derived from the second and third aspects may be the same or similar to those mentioned regarding the first aspect.

### BRIEF DESCRIPTION OF THE DRAWINGS

Non-limiting examples of the present disclosure will be described in the following, with reference to the appended drawings, in which:
Figure 1 shows a perspective view of a wind turbine;
Figure 2A shows a perspective view of a wind turbine blade;
Figure 2B shows a zoomed view of a blade root end;
Figure 2C shows a side view of a joint connection and a fastener;
Figure 3 shows a method of repairing a wind turbine blade root;
Figure 4A shows a side view of a joint connection including an insert;
Figure 4B shows an overhead view of the joint connection of Figure 4A;
Figure 4C shows the joint connection of Figure 4A including a second insert.
Figure 5A shows a longitudinal view of a joint connection including a cuboidal insert; and
Figure 5B shows a longitudinal view of a joint connection including a wedge insert.

### DETAILED DESCRIPTION OF EXAMPLES

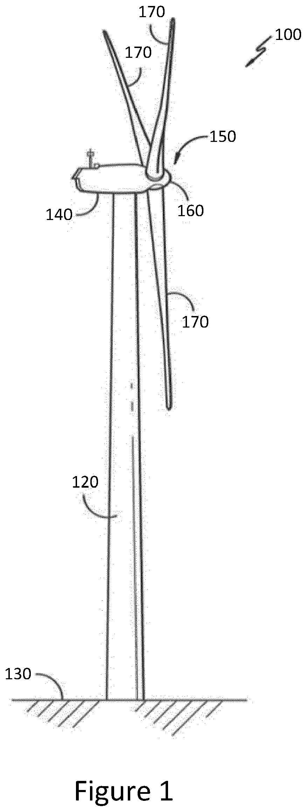

Figure 1 shows a perspective view of one example of a wind turbine 100. As shown, the wind turbine 100 includes a tower 120 extending from a support surface 130, a nacelle 140 mounted on the tower 120 and a rotor 150 coupled to the nacelle 140. The rotor 150 includes a rotor hub 160 and at least one wind turbine blade 170 coupled to and extending outwardly from the rotor hub 160. In the example shown in Figure 1, the rotor 150 includes three wind turbine blades 170. However, the rotor 150 may include more or less than three wind turbine blades 170. Each wind turbine blade 170 may be spaced from the rotor hub 160 to facilitate rotating the rotor 150 to enable kinetic energy to be transferred from the wind into usable mechanical energy and, subsequently, electrical energy. For instance, the rotor hub 160 may be rotatably coupled to an electric generator positioned within the nacelle 140 or forming part of the nacelle 140 to permit electrical energy to be produced.

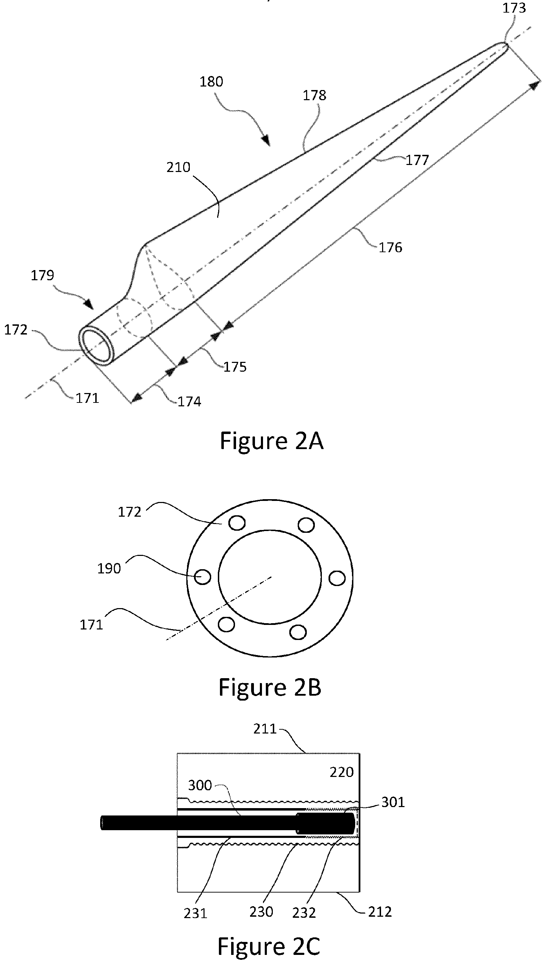

Figure 2A shows an example of a wind turbine blade 170. The wind turbine blade 170 comprises a reinforcing structure (not shown) and a wind turbine blade shell 180 surrounding the reinforcing structure. The wind turbine blade shell 180 defines the outer shape of the wind turbine blade 170.

The wind turbine blade 170 extends in a longitudinal direction or lengthwise direction 171 from a blade root end 172 to a blade tip end 173. The wind turbine blade 170 comprises a blade root or blade root region/portion 174 closest to the rotor hub 160, a profiled or an airfoil portion 176 furthest away from the rotor hub 160 and a transition portion 175 between the blade root 174 and the airfoil portion 176. The wind turbine blade 170 comprises a leading edge 177 facing the direction of rotation of the wind turbine blade 170 when mounted on the rotor hub 160 and a trailing edge 178 facing the opposite direction of the leading edge 177.

The airfoil portion 176 has a shape designed to generate lift, whereas the blade root 174 has a circular or elliptical cross-section for structural considerations and easy mounting of the wind turbine blade 170 to the rotor hub 160. The diameter or the chord of the blade root 174 may be constant along the entire blade root 174. At the transition portion 175, the profile gradually changes from the circular or elliptical cross-section of the blade root 174 to the airfoil profile of the airfoil portion 176. The wind turbine blade 170 may be connected to the rotor hub 160 through a blade root attachment portion 179.

Figure 2B shows a zoomed view of the blade root end 172. As shown in Figure 2B, the blade root end 172 includes a plurality of joint connections 190 embedded into laminate (e.g., unidirectional or bidirectional laminate) of the wind turbine blade 170. Each of the plurality of joint connections 190 is configured to receive a fastener (see Figure 2C). Each fastener is configured to connect that blade root end 172 of the wind turbine blade to the rotor hub 160. For instance, a joint connection 190 may be configured to accommodate a bolt which is configured to attach the wind turbine blade 170 to the rotor hub 160, thereby strengthening the connection of the wind turbine blade 170 to the rotor hub 160. The joint connection 190 may comprise a bushing or a T-bolt connection.

Figure 2C shows an external side 211 and an internal side 212 of a wind turbine blade 170, laminate 220, a bushing 230 as an example of a joint connection and a bolt 300 as an example of a fastener. An inner surface of the bushing 230 comprises a non-threaded portion 231 and a threaded portion 232. The threaded portion 232 enables the bushing 230 to cooperate with a corresponding threaded portion 301 (e.g., tip) of the bolt 300. In the example shown in Figure 2C, an outer surface of the bushing 230 is corrugated.

The stability of the joint connection 190 is partly dependent on the integrity of the laminate 220 from which the wind turbine blade shell 180 is made. In other words, joint connections 190 may become loose if the surrounding laminate 220 is, for instance, cracked, leading to a negative impact on the performance of the wind turbine 100. Even if the fastener (e.g., bolt 300) remains fastened to the joint connector 190 (e.g., bushing 230), the joint connector 190 may become detached from the laminate 220. Loosening of joint connection 190 may be remedied by replacing the wind turbine blade 170 or removing the wind turbine blade 170 to be repaired, both of which are time-consuming and expensive processes.

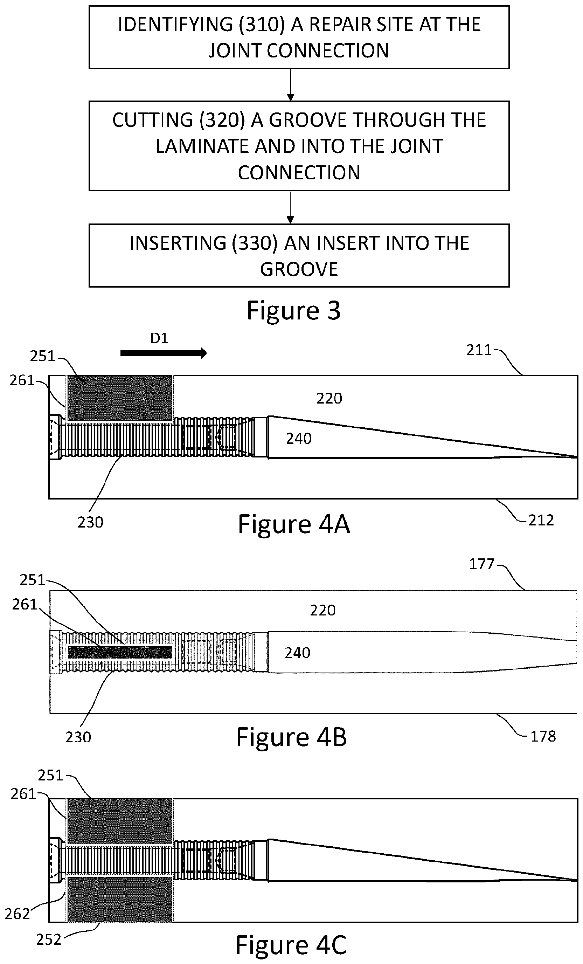

Figure 3 shows a block diagram of a method of repairing a joint connection 190 of a wind turbine blade root 174. The method comprises identifying 310 a repair site at the joint connection 190. For example, the method may comprise identifying 310 which of a plurality of joint connections 190 have become damaged (e.g. cracked) or disconnected (e.g., identifying which of a plurality of bushings 230 have become disconnected from the laminate 220). Being damaged may mean that a joint connection 190 is at least partially delaminated (i.e., the laminate 220 surrounding the joint connection 190 has come away). In one example, identifying 310 a repair site may comprise scanning the blade root 174. Advantageously, scanning may allow a more accurate image (e.g., a 3D image) of the blade root 174 to be obtained, thereby allowing more reliable identification of the repair site. To this end, an ultrasound scanner may be of particular use.

The method also comprises cutting 320 a groove (e.g., an opening, such as a slot) through the laminate of the wind turbine blade 170 (i.e., the wind turbine blade shell 180) and into the joint connection 190 at the repair site. In other words, the groove is cut such that it spans the laminate 220 and penetrates the joint connection 190 at the repair site. In the case that the joint connection 190 is a bushing, the groove may be cut on the non-threaded portion 231 of the bushing 230 to avoid affecting cooperation of the bushing 230 with the bolt 300. In another example, the groove may be cut on the threaded portion 232.

The method also comprises inserting 330 an insert into the groove. As the groove is cut through the laminate 220 and into the joint connection 190, the insert contacts (e.g., traverses or straddles) the laminate 220 and the joint connection 190. Advantageously, therefore, the insert strengthens the attachment of the blade root 174 to the rotor hub 160. This arrangement may cause load transfer from the joint connection 190 to the insert and to the laminate 220, circumventing the joint connection-laminate delaminated interface. Advantageously, that the method may be performed with simple tools means that it can be performed up-tower, which is cheaper than down-tower repair.

The method may comprise adding adhesive to the groove and curing the adhesive to secure the insert in the groove. In one example, adding adhesive to the groove comprises filling the groove with the adhesive, which may, advantageously, cause the insert to be more securely fixed in the groove. Relatedly, the groove and/or the insert may comprise one or more corrugated surfaces in order to facilitate securement of the insert in the groove. In one example, the adhesive undergoes curing at ambient temperature. Therefore, advantageously, the adhesive may cure *in situ* without any need for special equipment. Excess adhesive may be wiped away before curing.

Figures 4A and 4B respectively show side and overhead views of a joint connection repaired according to the method described in relation to Figure 3. Figure 4A shows the external side 211 and the internal side 212 of a wind turbine blade 170, and Figure 4B shows the leading edge 177 and the trailing edge 178.

Both Figures 4A and 4B show laminate 220 of a wind turbine blade 170 at a blade root end 172 and a joint connection within the laminate 220. In the examples shown in Figures 4A and 4B, the joint connection comprises a bushing 230 and a tapered part 240. Advantageously, the tapered part may facilitate accommodation of the joint connection within the laminate 220 and/or may increase a contact area between the joint connection and the laminate 220. The bushing 230 may comprise a corrugated surface on its outer surface. Advantageously, the corrugated surface may increase friction between the bushing 230 and the laminate 220, thereby facilitating securement of the bushing 230.

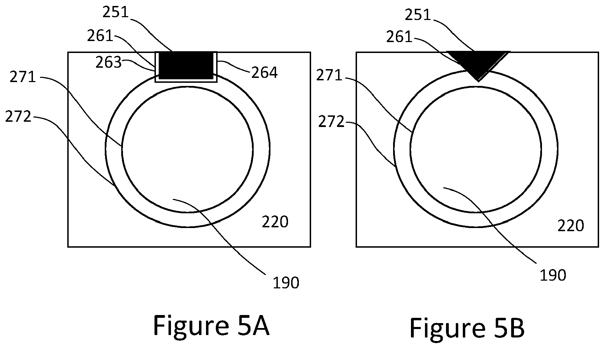

Figure 4A, in particular, shows how the groove 261, and hence the insert 251, may traverse the laminate 220 and the joint connection. The insert 251 may comprise one or more of steel, aluminium, carbon fibre and glass fibre. The insert 251 may have a rectangular cross-section (see Figure 5A). In one example, the insert 251 is cuboidal or a wedge. In another example, the insert 251 has a trapezoidal cross-section. Advantageously, inserts 251 having different geometries may be suitable for use at different repair sites. In the case that the insert 251 is cuboidal, the groove 261 may be uniform (e.g., straight). In the case that the insert 251 is a wedge (see Figure 5B), the groove 261 may be tapered. Advantageously, the insert 251 and the groove 261 being complementary in form may facilitate accommodation of the insert 251 by the groove 261.

In the example shown in Figures 4A and 4B, the insert 251 is between the external side 211 and the bushing 230. In another example, the insert 251 may analogously be between the internal side 212 and the bushing 230.

The method may also comprise identifying a second repair site at the joint connection, cutting a second groove through the laminate of the wind turbine blade and into the joint connection at the second repair site, and inserting a second insert into the second groove. The above description of the repair site, groove and insert apply equally to the second repair site, second grove and second insert. By identifying a second repair site, cutting a second groove and inserting a second insert, advantageously, the repaired joint connection is stronger compared with use of a single insert. Figure 4C shows the joint connection of Figure 4A and, additionally, a second insert 252 and in a second groove 262.

In the example show in Figure 4C, the second insert 252 is inserted from the internal side 212 and the insert 251 is inserted from the external side 211. In other words, the second insert 252 and the insert 251 are inserted from opposing sides of the wind turbine blade 170. Inserting the second insert 252 and the insert 251 from opposing sides may mean that the second insert 252 and the insert 251 are vertically aligned (i.e., inserted in the same plane). Advantageously, inserting the second insert 252 and the insert 251 from opposing sides may facilitate the insert 251 and the second insert 252 clamping (e.g., holding and/or supporting) the joint connection, thereby facilitating enhanced stability of the joint connection.

Figure 5A shows a view of the repaired joint connection of Figure 4A along direction D1 (see Figure 4A). Figure 5A emphasizes the location of the insert 251. As can be seen in Figure 5A, the insert 251 (i.e., the inner end of the insert 251) penetrates the joint connector 190 such that the final position of a first end of the insert 251 is below an inner surface 271 of the joint connector 190. In the example shown in Figure 5A, in being below the inner surface 271, the inner end of the insert 251 is between the inner surface 271 and the outer surface 272. In another example, in being below the inner surface 271, the inner end of the insert 251 is below the outer surface 272. The end of the insert that does not penetrate the inner surface 271 (i.e., the outer end of the insert 251) may be covered or encapsulated by the laminate 220 or an alternative covering. Figure 5B corresponds to Figure 5A apart from the cuboidal insert 251 of Figures 4A and 5A being replaced by a wedge insert 251 and the groove 261 being tapered.

One or both of the side walls of the groove 261 may be corrugated. For example, in the case of a cuboidal insert 251, side walls 263, 264 may be corrugated.

The described method may enable a wind turbine blade root 174 comprising a joint connection 190, and by extension a wind turbine blade 170 comprising the wind turbine blade root 174, that has been damaged to be repaired and used in energy generation for a prolonged period.

For reasons of completeness, various aspects of the present disclosure are set out in the following numbered clauses:
Clause 1: A method of repairing a joint connection of a wind turbine blade root, the method comprising:
   identifying a repair site at the joint connection;
   cutting a groove through a laminate of the wind turbine blade and into the joint connection at the repair site; and
   inserting an insert into the groove, whereby the insert contacts the laminate and the joint connection.
Clause 2: The method of clause 1, wherein the joint connection comprises a bushing.
Clause 3: The method clause 1 or 2, wherein the insert comprises at least one of: steel, aluminium, carbon and glass fibre.
Clause 4: The method of any preceding clause, wherein the insert has a rectangular cross-section.
Clause 5. The method of any of clauses 1 to 3, wherein the insert has a trapezoidal cross-section.
Clause 6: The method of any preceding clause, wherein the groove is uniform.
Clause 7: The method of any of clause 1 to 5, wherein the groove is tapered.
Clause 8: The method of any preceding clause, comprising:
   adding adhesive to the groove.
Clause 9: The method of clause 8, comprising:
   curing the adhesive.
Clause 10: The method of clause 8 or 9, wherein the adhesive undergoes curing at ambient temperature.
Clause 11. The method of any one of clauses 8 to 10, comprising:
   wiping away any excess adhesive.
Clause 12. The method of any preceding clause, wherein identifying the repair site comprises:
   identifying a joint connection that is at least partially delaminated.
Clause 13: The method of any preceding clause, wherein identifying the repair site comprises:
   scanning the wind turbine blade root portion with a scanner.
Clause 14: The method of clause 13, wherein the scanner comprises an ultrasound scanner.
Clause 15: The method of any preceding clause, comprising:
   identifying a second repair site at the joint connection;
   cutting a second groove through the laminate of the wind turbine blade and into the joint connection at the second repair site; and
   inserting a second insert into the second groove, whereby the second insert contacts the laminate and the joint connection.
Clause 16: The method of clause 15, comprising:
   inserting the second insert from an internal side of the wind turbine blade and inserting the insert from an external side of the wind turbine blade.
Clause 17: The method of clause 16, wherein the insert and the second insert clamp the joint connection.
Clause 18: The method of clause 16 or 17, wherein the insert and the second insert are aligned.
Clause 19: A wind turbine blade root comprising the joint connection repaired according to any preceding clause.
Clause 20: A wind turbine blade comprising the wind turbine blade root according to clause 19.

## Claims

1. A method of repairing a joint connection (190) of a wind turbine blade root (174), the method comprising:
identifying (310) a repair site at the joint connection;
cutting (320) a groove through a laminate of the wind turbine blade (170) and into the joint connection at the repair site; and
inserting (330) an insert (251) into the groove (261), whereby the insert contacts the laminate and the joint connection.

2. The method of claim 1, wherein the joint connection comprises a bushing.

3. The method claim 1 or 2, wherein the insert comprises at least one of: steel, aluminium, carbon and glass fibre.

4. The method of any preceding claim, wherein the insert has a trapezoidal cross-section.

5. The method of any preceding claim, wherein the groove is tapered.

6. The method of any preceding claim, comprising:
adding adhesive to the groove.

7. The method of claim 6, comprising:
curing the adhesive.

8. The method of claim 6 or 7, wherein the adhesive undergoes curing at ambient temperature.

9. The method of any preceding claim, wherein identifying the repair site comprises:
identifying a joint connection that is at least partially delaminated.

10. The method of any preceding claim, wherein identifying the repair site comprises:
scanning the wind turbine blade root portion with a scanner.

11. The method of any preceding claim, comprising:
identifying a second repair site at the joint connection;
cutting a second groove (262) through the laminate of the wind turbine blade and into the joint connection at the second repair site; and
inserting a second insert (252) into the second groove, whereby the second insert contacts the laminate and the joint connection.

12. The method of claim 11, comprising:
inserting the second insert from an outer surface of the wind turbine blade and inserting the insert from an inner surface of the wind turbine blade.

13. The method of claim 12, wherein the insert and the second insert clamp the joint connection.

14. A wind turbine blade root comprising the joint connection repaired according to any preceding claim.

15. A wind turbine blade comprising the wind turbine blade root according to claim 14.
